# EUROPÄISCHE PATENTANMELDUNG

(11) **EP 1 589 775 A1**
(43) Veröffentlichungstag der Anmeldung: **26.10.2005**
(21) Anmeldenummer: 04009627.3
(22) Anmeldetag: 23.04.2004
(51) Int. Cl.: H04Q 7/38, H04M 3/42, H04M 3/48

(54) **Verfahren und Vorrichtung zur Herstellung von Telefonverbindungen**

(71) Anmelder: MEGA Satellitenfernsehen GmbH, 41564 Kaarst (DE)
(72) Erfinder: Varol, Selim, 41564 Kaarst (DE)
(74) Vertreter: Stenger, Watzke & Ring

(57) **Zusammenfassung**

Der Erfindung liegt die Aufgabe zugrunde, ein Verfahren und eine Vorrichtung bereitzustellen, welche es dem Nutzer ermöglichen, den Wunsch zur Führung eines Telefonats mit einem bestimmten Mobilfunkendgerät einerseits zu hinterlegen, andererseits eine Verbindung zu erhalten, wenn dies auf Seiten des gewünschten Telefonendgerätes möglich ist. Darüber hinaus ist es wünschenswert, jeweils günstige Verbindungstarife zwischen unterschiedlichen Netzen nutzen zu können.

Zur technischen Lösung dieser Aufgabe wird mit der Erfindung vorgeschlagen ein Verfahren zur Herstellung von Telefonverbindungen, bei welchem
- ein Nutzer mittels eines Mobiltelefons unter Anwahl einer vorgegebenen Telefonnummer eine SMS-Nachricht an eine Zentralstelle übersendet, welche SMS-Nachricht eine von ihm gewünschte Telefonnummer umfaßt,
- die Zentralstelle zu der empfangenen Telefonnummer eine Verbindung herstellt,
- die Zentralstelle bei erfolgreichem Aufbau einer Verbindung zu der empfangenen Telefonnummer eine Verbindung zum Telefon des Nutzers herstellt und
- nach erfolgreichem Aufbau einer Verbindung zum Telefon des Nutzers beide Verbindungen zur Durchführung eines Telefongespräches miteinander verknüpft werden.

## Beschreibung

Die vorliegende Erfindung betrifft ein Verfahren und eine Vorrichtung zur Herstellung von Telefonverbindungen.

Telefonschaltanlagen sind bekannt und in großem Umfang im Einsatz. Sie dienen in erster Linie dem Zweck, mittels eines Telefonendgerätes gewählte Telefonnummern durch Schaltungssteuerung zum Aufbau einer Telekommunikationsverbindung zwischen wenigsten zwei Telefonendgeräten zu nutzen. Dabei sind auch Schaltungen und Verfahren zur automatischen Herstellung von Verbindungen zwischen Telefonendgeräten bekannt, die auch beispielsweise Rufumleitung, die automatische Vermittlung von R-Gesprächen und dergleichen umfassen.

Im Stand der Technik ist es geläufig, daß der Nutzer eines Telefonendgerätes die gewünschte Telefonnummer wählt. Ist diese - wie häufig in Mobilfunknetzen - nicht erreichbar, aufgrund der Führung eines Gespräches besetzt oder der Angewählte ist zur Zeit nicht verfügbar, hat der Nutzer die Möglichkeit der manuellen oder automatischen Wahlwiederholung zu einem späteren Zeitpunkt.

Aufgrund der Existenz verschiedener Festnetze und Mobilfunknetze hat der Nutzer nur die Möglichkeiten, nach den Tarifen der jeweiligen Telefonnetz- oder Mobilfunknetz-Betreiber zu nutzen.

Ausgehend vom vorbeschriebenen Stand der Technik liegt der Erfindung die **Aufgabe** zugrunde, ein Verfahren und eine Vorrichtung bereitzustellen, welche es dem Nutzer ermöglichen, den Wunsch zur Führung eines Telefonats mit einem bestimmten Mobilfunkendgerät einerseits zu hinterlegen, andererseits eine Verbindung zu erhalten, wenn dies auf Seiten des gewünschten Telefonendgerätes möglich ist. Darüber hinaus ist es wünschenswert, jeweils günstige Verbindungstarife zwischen unterschiedlichen Netzen nutzen zu können.

Zur technischen **Lösung** dieser Aufgabe wird mit der Erfindung vorgeschlagen ein Verfahren zur Herstellung von Telefonverbindungen, bei welchem
- ein Nutzer mittels eines Mobiltelefons unter Anwahl einer vorgegebenen Telefonnummer eine SMS-Nachricht an eine Zentralstelle übersendet, welche SMS-Nachricht eine von ihm gewünschte Telefonnummer umfaßt,
- die Zentralstelle zu der empfangenen Telefonnummer eine Verbindung herstellt,
- die Zentralstelle bei erfolgreichem Aufbau einer Verbindung zu der empfangenen Telefonnummer eine Verbindung zum Telefon des Nutzers herstellt und
- nach erfolgreichem Aufbau einer Verbindung zum Telefon des Nutzers beide Verbindungen zur Durchführung eines Telefongespräches miteinander verknüpft werden.

Das erfindungsgemäße Verfahren ermöglicht dem Nutzer eines Telefonendgerätes - vorzugsweise eines Mobilfunkendgerätes im GSM-Netz - per SMS an eine vorgegebene Telefonnummer die Telefonnummer des gewünschten Telefonendgerätes zu übertragen. Die Zentralanlage kümmert sich nunmehr automatisch darum, eine Verbindung zu diesem gewünschten Telefonendgerät herzustellen. Sobald dies gelungen ist, stellt sie eine Verbindung zu dem anfordernden Telefonendgerät her. Sobald dies erfolgreich geschehen ist, verknüpft sie beide Verbindungen und die Nutzer der beiden Telefonendgeräte können ihr Gespräch führen.

Einerseits wird der Anrufer in Bezug auf die Verbindungsherstellung entlastet, andererseits besteht auch die Möglichkeit, dem Angerufenen Informationen zu übermitteln, so daß dieser über die Nutzung der Verbindung entscheiden kann.

Darüber hinaus besteht mit dem erfindungsgemäßen Verfahren auch die Möglichkeit, netzübergreifende günstige Tarife zu nutzen. So kann die Zentralanlage, die in Bezug auf Anrufer und Angerufenem nicht nur Schaltanlage, sondern ihrerseits auch Verbindungszwischengerät darstellt, zu beiden das jeweils zu diesen gehörende Netz nutzen und anlagenseitig verknüpfen.

Eine weitere vorteilhafte Option des erfindungsgemäßen Verfahrens besteht darin, daß die Zentralanlage ihrerseits automatische SMS-Nachrichten erstellen und übermitteln kann. So kann sie beispielsweise dem Angerufenen übermitteln, daß und wer bzw. welche Telefonnummer die Verbindung wünscht. Der Angerufene kann nun seinerseits unter Nutzung des SMS-Systems zu einem von ihm gewünschten Zeitpunkt die Verbindung zu dem ursprünglichen Anrufer herstellen. Die Verbindungswünsche können in der Zentralanlage vorgespeichert und beispielsweise unter Nutzung von Codenummern verwaltet werden. Auf diese Weise wird die Herstellung gewünschter Verbindungen erheblich vereinfacht und für die Nutzer praktisch vorgebbar. So kann diese Option auch dahingehend ergänzt werden, daß der Anrufer neben der Telefonnummer eine gewünschte Verbindungszeit angibt, zu welcher sich die Zentralanlage um die Herstellung der beiden Verbindungen und der Verknüpfung derselben kümmert.

Darüber hinaus ermöglicht die Erfindung, daß die Zentralanlage automatisch günstige Tarifanbieter auswählt und zugunsten der beiden Endnutzer verwendet.

Vorrichtungsseitig wird zur **Lösung** der erfindungsgemäßen Aufgabe vorgeschlagen eine Telefonschaltanlage zur Durchführung des Verfahrens umfassend
- eine Empfangseinheit zum Empfang und zur Analyse von SMS-Nachrichten,
- eine Sendeempfangseinheit zum Aufbau von Telefonverbindungen in Telefonnetzen,
- eine Einheit zur Verknüpfung von wenigstens zwei aufgebauten Telefonverbindungen und
- eine Steuereinheit zur Entnahme einer gewünschten Telefonnummer aus einer SMS, dem Aufbau einer Telefonverbindung zur gewünschten Telefonnummer, zur Herstellung einer Verbindung zum Telefon des Nutzers und zur Veranlassung der Verknüpfung zweier aufgebauter Telefonverbindungen.

Eine solche Anlage, die schaltungstechnisch oder durch ein entsprechendes Softwareprogramm auf einer Rechneranlage realisiert sein kann oder auch durch Kombinationen beider ermöglicht die flexible Nutzung von Telefonnetzen einerseits, und die effektive und zielgerichtete Herstellung von Kommunikationsverbindungen unter Berücksichtigung der unterschiedlichen Anforderungen der Nutzer andererseits.

Die Erfindung stellt ein neuartiges System für die Abwicklung von Telekommunikationsvorgängen bereit. Weitere Vorteile und Merkmale der Erfindung ergeben sich aus der folgenden Beschreibung anhand der Figuren. Dabei zeigen:

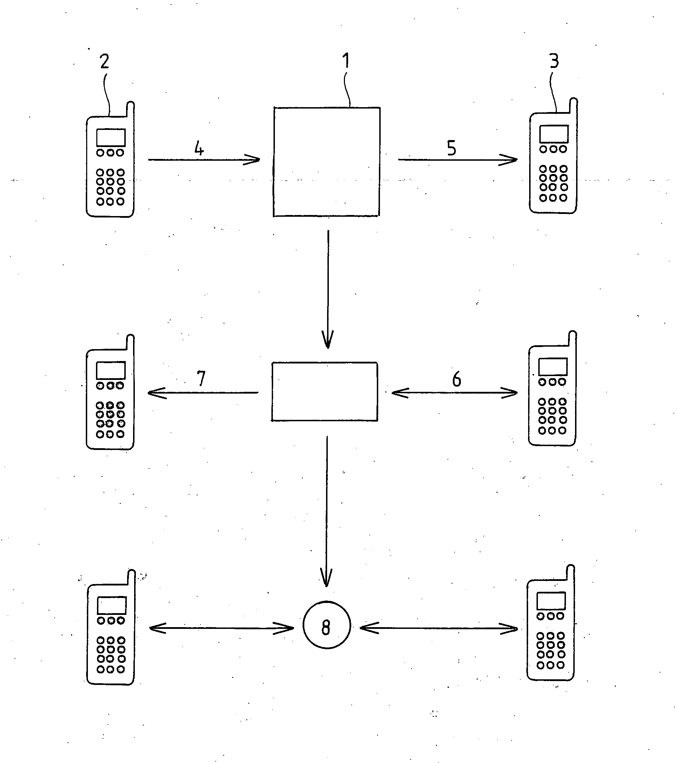

- Fig. 1: eine flußdiagrammartige Darstellung eines Ausführungsbeispiels für die Erfindung.

Gemäß Fig. 1 wird eine Zentralstelle 1 mit einer festen Anwahlnummer eingerichtet.

Mittels eines Mobilfunkendgerätes 2 wird eine SMS an die Zentralstelle 1 übersandt, welche die Nummer eines anderen Telefonendgerätes 3 darstellt oder umfaßt. Die Übersendung ist mit Sendepfeil 4 dargestellt. Die Zentralstelle 1 wertet die SMS aus und bemüht sich im Schritt 5, eine Verbindung zu dem Telefonendgerät 3 herzustellen.

Sobald diese Verbindung 6 hergestellt ist, wählt die Zentralstelle das Mobilfunkendgerät 2 im Schritt 7 an. Sobald auch diese Verbindung hergestellt ist, werden die beiden stehenden Verbindungen im Schritt 8 miteinander verknüpft, so daß die Nutzer des Telefonendgerätes 2 und des Telefonendgerätes 3 miteinander kommunizieren können.

Das beschriebene Ausführungsbeispiel dient nur der Erläuterung und ist nicht beschränkend.

## Patentansprüche

1. Verfahren zur Herstellung von Telefonverbindungen, bei welchem
- ein Nutzer mittels eines Mobiltelefons unter Anwahl einer vorgegebenen Telefonnummer eine SMS-Nachricht an eine Zentralstelle übersendet, welche SMS-Nachricht eine von ihm gewünschte Telefonnummer umfaßt,
- die Zentralstelle zu der empfangenen Telefonnummer eine Verbindung herstellt,
- die Zentralstelle bei erfolgreichem Aufbau einer Verbindung zu der empfangenen Telefonnummer eine Verbindung zum Telefon des Nutzers herstellt und
- nach erfolgreichem Aufbau einer Verbindung zum Telefon des Nutzers beide Verbindungen zur Durchführung eines Telefongespräches miteinander verknüpft.

2. Verfahren nach Anspruch 1, **dadurch gekennzeichnet, daß** die Übertragung der die gewünschte Telefonnummer enthaltenen SMS an eine fest eingestellte Zentralnummer erfolgt.

3. Verfahren nach einem der vorhergehenden Ansprüche, **dadurch gekennzeichnet, daß** die Zentralstelle die Verknüpfung zwischen den beiden Telefonverbindungen netzübergreifend vornimmt.

4. Verfahren nach einem der vorhergehenden Ansprüche, **dadurch gekennzeichnet, daß** der Nutzer eine Uhrzeit übermittelt, zu welcher die Verbindung hergestellt wird.

5. Telefonschaltanlage zur Durchführung des Verfahrens nach einem der Ansprüche 1 bis 4, umfassend
- eine Empfangseinheit zum Empfang und zur Analyse von SMS-Nachrichten,
- eine Sendeempfangseinheit zum Aufbau von Telefonverbindungen in Telefonnetzen,
- eine Einheit zur Verknüpfung von wenigstens zwei aufgebauten Telefonverbindungen und
- eine Steuereinheit zur Entnahme einer gewünschten Telefonnummer aus einer SMS, dem Aufbau einer Telefonverbindung zur gewünschten Telefonnummer, zur Herstellung einer Verbindung zum Telefon des Nutzers und zur Veranlassung der Verknüpfung zweier aufgebauter Telefonverbindungen.

6. Telefonschaltanlage nach Anspruch 5, **dadurch gekennzeichnet, daß** die Steuereinheit in Form einer Rechneranlage ausgeführt ist.
